# EUROPÄISCHE PATENTSCHRIFT

(11) **EP 3 095 995 B1**
(45) Veröffentlichungstag und Bekanntmachung des Hinweises auf die Patenterteilung: **19.09.2018**
(21) Anmeldenummer: 16169407.0
(22) Anmeldetag: 12.05.2016
(51) Int. Cl.: F02M 25/022, F02B 29/04, F02M 25/028, F28F 17/00, F28D 21/00, F28F 9/14

(54) **LADELUFTKÜHLER**
CHARGE AIR COOLER
REFROIDISSEUR D'AIR DE SURALIMENTATION

(30) Priorität: 20.05.2015 DE 102015209209
(43) Veröffentlichungstag der Anmeldung: 23.11.2016
(73) Patentinhaber: Mahle International GmbH, 70376 Stuttgart (DE)
(72) Erfinder: DIETERLE, Stefan, 73733 Esslingen (DE); STRAUß, Thomas, 73274 Notzingen (DE); BÜRCK, Christian, 71032 Böblingen (DE)
(74) Vertreter: BRP Renaud & Partner mbB Rechtsanwälte Patentanwälte Steuerberater

(56) Entgegenhaltungen:
- WO-A1-2015/046182
- DE-A1- 3 601 391
- DE-A1- 10 234 272
- US-A1- 2011 107 760

## Beschreibung

Die vorliegende Erfindung betrifft einen Ladeluftkühler mit einem Luftaustrittskasten sowie mit einem Kondensatsammler zum Sammeln von insbesondere in dem Ladeluftkühler abgeschiedenem Kondensat gemäß dem Oberbegriff des Anspruchs 1. Die Erfindung betrifft außerdem einen Verbrennungsmotor mit einem solchen Ladeluftkühler.

Aus der DE 10 2009 042 981 A1 ist ein Ladeluftkühler mit einem Lufteintrittskasten und einem Luftaustrittskasten sowie mit einem Kondensatsammler zum Sammeln von in dem Ladeluftkühler abgeschiedenem Kondensat bekannt. Darüber hinaus ist eine Kondensatleitung vorgesehen, die über einen Eingang mit dem Kondensatsammler und über einen Ausgang mit einem Luftansaugkrümmer verbunden ist. Hierdurch soll während des Betriebs des Ladeluftkühlers eine differenzdruckbedingte Kondensatabsaugung aus dem Kondensatsammler bewirkt werden, wodurch insbesondere bisher verwendete Aktuatoren, Klappen und/oder Steuerungen entfallen können.

Aus der DE 10 2009 011 634 A1 ist wiederum ein gattungsgemäßer Ladeluftkühler bekannt, bei welchem eine Kondensatleitung kontinuierlich als Reaktion auf einen von einer Drosselklappe erzeugten Gradienten Kondensat aus dem Kondensatsammler absaugt, sofern sich ein Motor in eingeschaltetem Zustand befindet.

Aus der DE 10 2008 045 685 A1 ist eine Verbrennungsmotor-Anordnung mit einem Verbrennungsmotor, einem Ladeluftverdichter, einer Niederdruckabgasrückführung, einem Ladeluftkühler und einer Ladeluftleitung bekannt. Dabei ist vorgesehen, dass der Ladeluftkühler an dem tiefsten Punkt des Ladeluftkühler-Luftkanals eine verschließbare Kondensatablauföffnung aufweist, die durch eine Kondensatablaufleitung mit der Ladeluftleitung verbunden ist. Hierdurch soll es ermöglicht werden, einen Kondensatablauf in die Ladeluftleitung zu steuern.

Aus der DE 36 01 391 A1 ist ein Ladeluftkühler mit einem Luftaustrittskasten und einem Kondensatsammler zum Sammeln von insbesondere in dem Ladeluftkühler abgeschiedenem Kondensat bekannt. Darüber hinaus vorgesehen ist eine Kondensatleitung, die über einen Eingang mit dem Kondensatsammler verbunden ist und die über einen Ausgang in den Luftaustrittskasten des Ladeluftkühlers mündet, wobei im Betrieb des Ladeluftkühlers ein Druckgefälle zwischen dem Eingang und dem Ausgang herrscht, das eine differenzdruckbedingte Kondensatabführung aus dem Kondensatsammler über die Kondensatleitung 12 ermöglicht.

Aus der DE 10 2012 219 796 A1 ist eine Ladeluftzuführung mit einem Saugrohr bekannt, über welches ein Fluid aus einem Kondensatsammelbereich abgesaugt werden kann.

Aus der DE 10 2009 022 986 A1 ist ebenfalls ein Ladeluftkühler mit einem Luftaustrittskasten sowie mit einem Kondensatsammler zum Sammeln von insbesondere in dem Ladeluftkühler abgeschiedenem Kondensat bekannt.

Generell kann es je nach Umgebungsbedingung (Temperatur und relative Luftfeuchte) sowie den vorliegenden Betriebsbedingungen dazu kommen, dass Kondensat im Ladeluftkühler anfällt. Zum einen bevorzugt bei kleiner Last und niedrigem Ladedruck zum anderen bei Niederdruck Abgasrückführanwendung. Hierdurch kann es zum einen zu einer Beeinträchtigung des Ladeluftkühlvorgangs kommen, insbesondere bei einer Umgebungstemperatur unterhalb des Gefrierpunkts, bei welchem das sich angesammelte Kondensat gefrieren kann. Dadurch ist der Durchgang der Ladeluft durch den Ladeluftkühler teilweise blockiert. Jedoch weit kritischer ist die Volumenausdehnung des Wassers beim Gefrieren, was gesprengte Rohre des Ladeluftkühlers zur Folge haben kann. Auch durch den schlagartigen Eintrag des gesamten, angesammelten Kondensates in den Verbrennungsmotor kann dieser teilweise irreparablen Schaden nehmen.

Aus diesem Grund ist es aus dem Stand der Technik bekannt, Kondensat im Ladeluftkühler zu vermeiden oder aus dem Ladeluftkühler abzuführen, wozu hierfür beispielsweise mittels Aktuatoren betriebene Öffnungsklappen vorgesehen sind. Auch Bypassleitungen um den Ladeluftkühler herum sind bekannt. Aus dem Stand der Technik ist zudem bekannt, das Kondensat aufgrund eines Differenzdrucks zwischen einem Luftansaugkrümmer und einem Kondensatsammler am Ladeluftkühler permanent und ohne zusätzliche Aktuatoren bzw. Klappen abzusaugen.

Nachteilig bei den aus dem Stand der Technik bekannten Lösungen ist jedoch, dass diese entweder teuer und konstruktiv aufwendig sind, oder aber eine separate Montage einer Kondensatleitung erfordern.

Die vorliegende Erfindung beschäftigt sich daher mit dem Problem, für einen Ladeluftkühler der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Ladeluftkühler mit einem Luftaustrittskasten sowie mit einem dazwischen angeordneten Wärmeübertragerblock mit einem Kondensatsammler auszustatten, der insbesondere in dem Ladeluftkühler abgeschiedenes Kondensat sammelt und zugleich eine Kondensatleitung vorzusehen, über die selbsttätig, das heißt ohne Aktuatoren oder Klappen, das im Kondensatsammler gesammelte Kondensat in den Luftaustrittskasten befördert und von dort einem Verbrennungsmotor zugeführt werden kann. Im Unterschied zum Stand der Technik sind somit weder ein Aktuator noch eine Klappe nötig, noch ist es erforderlich, die Kondensatleitung nach dem Einbau des Ladeluftkühlers noch separat anschließen zu müssen. Vielmehr bildet der Ladeluftkühler eine vollständig vorfertigbare Baugruppe, bei welcher nach dem Anschluss an den Ladeluftpfad und den Kühlmittelkreislauf kein weiterer Anschluss einer Kondensatleitung erforderlich ist. Die Kondensatleitung ist dabei über einen Eingang mit dem Kondensatsammler verbunden und über einen Ausgang mit dem Luftaustrittskasten, wobei im Betrieb des Ladeluftkühlers zwischen dem Eingang und dem Ausgang der Kondensatleitung ein Druckgefälle herrscht, welches eine differenzdruckbedingte Kondensatabführung aus dem Kondensatsammler über die Kondensatleitung ermöglicht. Bei dem erfindungsgemäßen Ladeluftkühler bietet sich darüber hinaus der große Vorteil, dass die Kondensatleitung vom Kondensatsammler zum Luftaustrittskasten nur vergleichsweise kurz ist, wodurch im Vergleich zu einer zu einem Luftansaugkrümmer führenden Kondensatleitung deutlich weniger Material benötigt wird, wodurch sich die Kosten reduzieren lassen. Von weiterem großen Vorteil bei dem erfindungsgemäßen Ladeluftkühler ist, dass die zwischen dem Ausgang und dem Eingang der Kondensatleitung liegende Höhendifferenz im Vergleich zu aus dem Stand der Technik bekannten Kondensatleitungen deutlich kleiner ist, was sich positiv auf die Abführung des Kondensats auswirkt. Insbesondere ist aufgrund der deutlich reduzierten Höhendifferenz auch nur ein deutlich reduziertes Druckgefälle zwischen dem Ausgang und dem Eingang der Kondensatleitung erforderlich, um das im Kondensatsammler gesammelte Kondensat zuverlässig abführen zu können. Ein weiterer entscheidender Vorteil ist, dass bei einer vorteilhaften Weiterbildung die Kondensatzuführung an der engsten Stelle im Stutzenbereich des Luftaustrittskasten stattfindet. Hier herrscht die höchste Geschwindigkeit der Ladeluft und damit der geringste Druck. Damit ist der Druckgradient maximal und somit ein sicherer Transport des Kondensats gewährleistet.

Bei dem erfindungsgemäßen Ladeluftkühler besteht somit eine Integration (bauliche Einheit) der Funktionen Sammeln und Wiederzuführen. Dies bedeutet, der Ladeluftkühler weist einen integrierten Kondensatsammler, einen Kondensateinlauf in den Kondensatsammler und eine Kondensatsammlung, sowie eine Wiederzuführung des Kondensates innerhalb des Ladeluftkühlers unter Nutzung eines Druckgefälles für den Transport des Kondensats (Venturi-Prinzip) auf.

Bei einer vorteilhaften Weiterbildung einer nicht erfindungsgemäßen Lösung ist der Kondensatsammler an den Luftaustrittskasten angebaut, insbesondere angeschweißt, angelötet, angeklebt, angeschraubt oder angeclipst. Bereits diese nicht abschließende Aufzählung lässt erahnen, welch mannigfaltige Möglichkeiten zur Befestigung des Kondensatsammlers am Luftaustrittskasten zur Verfügung stehen und zwar sowohl mittels lösbarer Verbindungen als auch mittels unlösbarer Verbindungen. Besonders das Anschrauben oder Anclipsen ermöglicht darüber hinaus eine erhöhte Wartungs-und Reparaturfreundlichkeit, da der Kondensatsammler einfach vom Luftaustrittskasten gelöst und beispielsweise ein Kondensatablauf im Luftaustrittskasten gereinigt werden kann. Der Luftaustrittskasten kann dabei als Diffusor ausgebildet sein.
Alternativ hierzu ist selbstverständlich auch denkbar, dass der Kondensatsammler in den Luftaustrittskasten integriert ist und einen integralen Bestandteil des Kondensatsammlers bildet. Dies kann insbesondere in der Art eines doppelten Bodens unterhalb des Luftaustrittskastens bzw. des Ladeluftkühlers erfolgen. Die Größe des Kondensatsammlers hängt dabei in erster Linie von der erwartenden Menge an Kondensat ab. Durch die Integration des Kondensatsammlers in den Luftaustrittskasten kann auf eine Montage des Kondensatsammlers am Luftaustrittskasten gänzlich verzichtet werden, wodurch diese Montagekosten entfallen und der Ladeluftkühler insgesamt kostengünstiger hergestellt werden kann.

Bei einer vorteilhaften Weiterbildung der erfindungsgemäßen Lösung ragt der Ausgang der Kondensatleitung in den Luftaustrittskasten hinein und ist insbesondere sogar in Strömungsrichtung der Ladeluft umgebogen. Hierdurch funktioniert der Ausgang der Kondensatleitung in der Art einer Venturidüse, die vom Ladeluftstrom umströmt ist und über diesen den für die Kondensatabführung erforderlichen Unterdruck am Ausgang der Kondensatleitung erzeugt. Hierzu kann der in den Luftaustrittskasten ragende Ausgang der Kondensatleitung nicht nur düsenförmig ausgebildet sein, sondern beispielsweise einen Durchmesser von 0,5 mm < d < 10mm, bevorzugt sogar einen Durchmesser d zwischen 0,8 und 5 mm aufweisen. Der gewählte Durchmesser hängt dabei ebenfalls von den Strömungsverhältnissen der Ladeluft im Luftaustrittskasten und von der zu fördernden Kondensatmenge ab.

Erfindungsgemäß verläuft die Kondensatleitung in der Wand des Luftaustrittskastens, das heißt sie ist in die Wand des Luftaustrittskastens integriert. Dies kann beispielsweise durch eine entsprechende Formgebung der Wand erreicht werden, wodurch der erfindungsgemäße Ladeluftkühler keinen höheren Bauraumbedarf erfordert, als bisherige Ladeluftkühler, jedoch die bisher erforderliche Montage der Kondensatleitung komplett entfallen kann. In diesem Fall kann die Kondensatleitung aus dem Wandmaterial des Luftaustrittskastens gebildet sein, beispielsweise aus Metall, wobei selbstverständlich eine derartige Ausbildung der Kondensatleitung auch bei einer externen Führung der Kondensatleitung möglich ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
Dabei zeigen, jeweils schematisch,
- Fig. 1: eine Schnittdarstellung durch einen Ladeluftkühler im Bereich eines Luftaustrittskastens und einer dort angeordneten Kondensatleitung,
- Fig. 2: eine Darstellung wie in Fig. 1, jedoch bei einer anderen Einmündung der Kondensatleitung in den Luftaustrittskasten,
- Fig. 3: eine Darstellung wie in Fig. 2, jedoch mit umgebogenem Ausgang der Kondensatleitung im Luftaustrittskasten,
- Fig. 4: den Ladeluftkühler mit entlang einer Wand des Luftaustrittskastens verlaufenden Kondensatleitung,
- Fig. 5: eine Darstellung wie in Fig. 2, jedoch mit integral am Ladeluftkühler ausgebildetem Kondensatsammler,
- Fig. 6: eine Darstellung wie in Fig. 5, jedoch mit einer erfindungsgemäß in der Wand des Luftaustrittskastens verlaufenden Kondensatleitung.

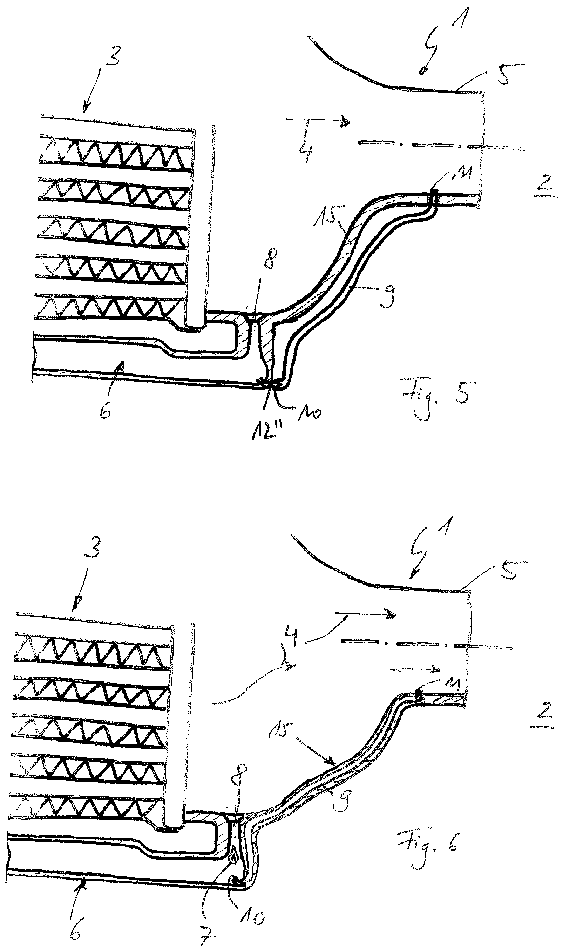

Figur 6 entsprechend weist ein erfindungsgemäßer Ladeluftkühler 1 eines im Übrigen nur angedeuteten Verbrennungsmotors 2 einen Wärmeübertragerblock 3, einen in Strömungsrichtung 4 davor gelegenen und nicht gezeigten Lufteintrittskasten sowie einen Luftaustrittskasten 5 auf. Ebenfalls vorgesehen ist ein Kondensatsammler 6 zum Sammeln von in dem Ladeluftkühler 1 abgeschiedenem Kondensat 7. Das Kondensat 7 läuft dabei über eine bodenseitig des Luftaustrittskastens 5 angeordnete Ablauföffnung 8 in den darunter angeordneten Kondensatsammler 6. Um das im Kondensatsammler 6 gesammelte Kondensat 7 abführen zu können, ist eine Kondensatleitung 9 vorgesehen, die über einen Eingang 10 mit dem Kondensatsammler 6 verbunden ist. Über einen Ausgang 11 mündet die Kondensatleitung 9 in den Luftaustrittskasten 5, wobei im Betrieb des Ladeluftkühlers 1 zwischen dem Eingang 10 und dem Ausgang 11 der Kondensatleitung 9 ein Druckgefälle p₁ > p₂ herrscht, welches eine differenzdruckbedingte Kondensatabführung aus dem Kondensatsammler 6 über die Kondensatleitung 9 in den Luftaustrittskasten 5 bewirkt. Die Anordnung des Ausgangs 11 im Luftaustrittskasten 5 mit der dort geringeren Querschnittsfläche des Luftaustrittskastens 5 als im Bereich des Wärmeübertragerblocks 3 bewirkt einen sogenannten Venturi-Effekt, der das Kondensat 7 aus dem Kondensatsammler 6 absaugt.

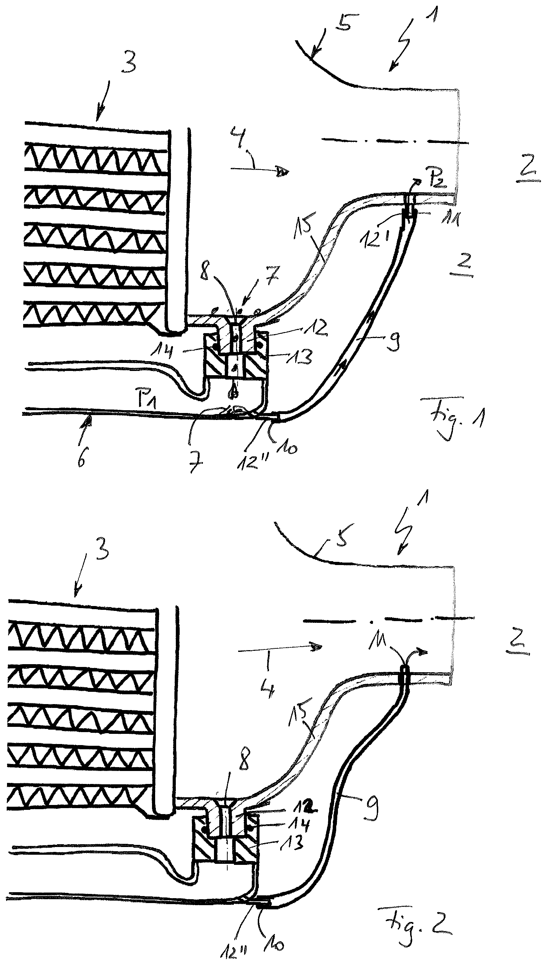

Betrachtet man dabei die gemäß den Fig. 1 bis 4 dargestellten Ladeluftkühler 1, so kann man erkennen, dass der Kondensatsammler 6 an den Luftaustrittskasten 5 angebaut ist, wobei der Luftaustrittskasten 5 beispielsweise einen Stutzen 12 aufweist, an welchem der Kondensatsammler 6 mit einer Kupplung 13 aufgesteckt ist. Um dabei einen unerwünschten Austritt von Kondensat 7 verhindern zu können, ist zwischen dem Stutzen 12 und der Kupplung 13 eine Dichtung 14 vorgesehen. Zusätzlich oder alternativ kann der Kondensatsammler 6 selbstverständlich auch am Luftaustrittskasten 5 angeschweißt, angelötet, angeschraubt, angeklebt oder angeclipst werden, das heißt sowohl mit unlösbaren Verbindungen, als auch mit lösbaren Verbindungen, wobei insbesondere die lösbaren Verbindungen den großen Vorteil bieten, den Kondensatsammler 6 im Wartungs- und Reparaturfall vom Ladeluftkühler 1, das heißt konkret vom Luftaustrittskasten 5 abnehmen und beispielweise die Ablauföffnung 8 reinigen zu können. Selbstverständlich bietet auch ein Verlöten des Kondensatsammlers 6 mit dem Luftaustrittskasten 5 Vorteile, da in diesem Fall der komplette Ladeluftkühler 1, das heißt mit Wärmeübertragerblock 3, Luftaustrittskasten 5 und Kondensatsammler 6 in einem Lötofen gemeinsam verlöten werden könnten.

Bei den gemäß den Fig. 5 und 6 gezeigten Ladeluftkühlern hingegen ist der Kondensatsammler 6 in den Luftaustrittskasten 5 integriert, das heißt er bildet einen integralen Bestandteil desselben, insbesondere in der Art eines doppelten Bodens.

Betrachtet man nochmals den Ladeluftkühler 1 gemäß der Fig. 1, so kann man erkennen, dass der Luftaustrittskasten 5 einen Stutzen 12' aufweist, über welchen die Kondensatleitung 9 mit ihrem Ausgang 11 angebunden ist. In gleicher Weise kann die Kondensatleitung 9 auch mit ihrem Eingang 10 über einen am Kondensatsammler 6 angeordneten Stutzen 12" (vgl. die Fig. 1 bis 3 und 5) angebunden sein. In diesem Fall ragt die Kondensatleitung 9 mit ihrem Ausgang 11 nicht in den Luftaustrittskasten 5 hinein.

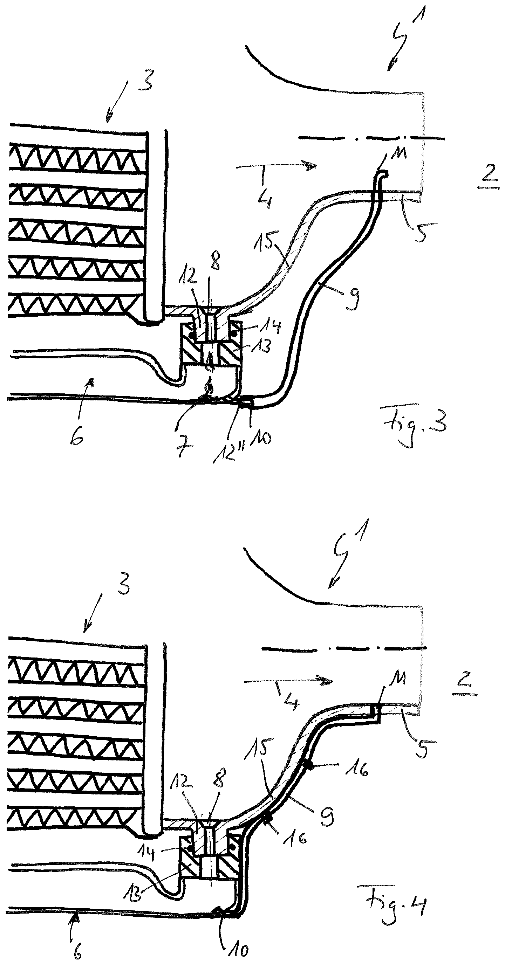

Betrachtet man die Fig. 2, so kann man erkennen, dass der Ausgang 11 der Kondensatleitung 9 in den Luftaustrittskasten 5 hineinragt und insbesondere wie dies gemäß der Fig. 3 dargestellt ist, in Strömungsrichtung 4 der Ladeluft umgebogen ist. Hierbei kann der in den Luftaustrittskasten 5 ragende Ausgang 11 der Kondensatleitung 9 düsenförmig ausgebildet sein und/oder einen Durchmesser d zwischen 0,5 und 10 mm, bevorzugt einen Durchmesser d zwischen 0,8 und 5,0 mm aufweisen. Auch bei den Ladeluftkühlern 1 gemäß den übrigen Figuren ist dabei die Kondensatabsaugung über die Kondensatleitung 9 aufgrund des sogenannten Venturieffekts gegeben.

Betrachtet man noch beispielsweise den Ladeluftkühler 1 gemäß der Fig. 4, so kann man erkennen, dass die Kondensatleitung 9 an einer Wand 15 des Luftaustrittskastens 5 entlang läuft und damit bauraumoptimiert angeordnet ist. Eine Halterung der Kondensatleitung 9 an der Wand 15 kann beispielsweise über Clipselemente 16 erfolgen, insbesondere sofern die Kondensatleitung 9 aus Kunststoff, beispielsweise als Gummischlauch, ausgebildet ist. Alternativ kann selbstverständlich auch vorgesehen sein, dass die Kondensatleitung 9 aus Metall ausgebildet ist und damit ohne zusätzliche Halterung dem Verlauf der Wand 15 folgen kann. Eine derartige Ausführungsform ist beispielsweise gemäß der Fig. 5 dargestellt.

Betrachtet man den Ladeluftkühler 1 gemäß der Fig. 6, so kann man erkennen, dass die Kondensatleitung 9 in der Wand 15 des Luftaustrittskastens 5 verläuft und damit integriert in derselben angeordnet ist. Dies stellt eine besonders bauraumoptimierte Lösung der Anordnung der Kondensatleitung 9 dar, wobei die Kondensatleitung 9 in diesem Fall zugleich geschützt in der Wand 15 angeordnet ist.

Mit dem erfindungsgemäßen Ladeluftkühler 1 lassen sich folgende wesentliche Vorteile im Vergleich zu aus dem Stand der Technik bekannten Ladeluftkühlern bewirken:
- ein effektives Kondensatmanagement (Sammlung und Wiederzuführung) in einem einzigen Bauteil, das heißt im Ladeluftkühler 1,
- keine Ansteuerung oder Regelung erforderlich, sondern eine autarke Funktionsweise aufgrund des Venturieffekts,
- kostengünstig, da keine zusätzlichen Aktuatoren und Klappen erforderlich sind,
- Dosierung, Menge und Form des zugeführten Kondensats 7 ist einfach über einen Durchmesser der Kondensatleitung 9 bzw. deren Ausgang 11 möglich.

Zudem besteht bei dem erfindungsgemäßen Ladeluftkühler 1 eine Integration (bauliche Einheit) der Funktionen Sammeln und Wiederzuführen. Dies bedeutet, der Ladeluftkühler 1 weist den integrierten Kondensatsammler 6, einen Kondensateinlauf in den Kondensatsammler 6 und eine Kondensatsammlung, sowie eine Wiederzuführung des Kondensates 7 innerhalb des Ladeluftkühlers 1 unter Nutzung eines Druckgefälles für den Transport des Kondensats 7 (Venturi-Prinzip) auf.

## Patentansprüche

1. Ladeluftkühler (1) mit
- einem Luftaustrittskasten (5) sowie mit einem Kondensatsammler (6) zum Sammeln von insbesondere im dem Ladeluftkühler (1) abgeschiedenem Kondensat (7),
- einer Kondensatleitung (9), die über einen Eingang (10) mit dem Kondensatsammler (6) verbunden ist,
- wobei die Kondensatleitung (9) über einen Ausgang (11) in den Luftaustrittskasten (5) des Ladeluftkühlers (1) mündet, wobei im Betrieb des Ladeluftkühlers (1) zwischen dem Eingang (10) und dem Ausgang (11) der Kondensatleitung (9) ein Druckgefälle p₁ < p₂ herrscht, welches eine differenzdruckbedingte Kondensatabführung aus dem Kondensatsammler (6) über die Kondensatleitung (9) ermöglicht,
**dadurch gekennzeichnet,**
**dass** die Kondensatleitung (9) in einer Wand (15) des Luftaustrittskastens (5) verläuft.

2. Ladeluftkühler nach Anspruch 1,
**dadurch gekennzeichnet,**
**dass** der Kondensatsammler (6) an den Luftaustrittskasten (5) angebaut ist.

3. Ladeluftkühler nach einem der vorhergehenden Ansprüche,
**dadurch gekennzeichnet,**
**dass** der Kondensatsammler (6) an den Luftaustrittskasten (5) angeschweißt, angelötet, angeklebt, angeschraubt oder angeclipst ist.

4. Ladeluftkühler nach Anspruch 1,
**dadurch gekennzeichnet,**
**dass** der Kondensatsammler (6) einen integralen Bestandteil des Luftaustrittskastens (5) bildet.

5. Ladeluftkühler nach einem der vorhergehenden Ansprüche,
**dadurch gekennzeichnet,**
- **dass** der Ausgang (11) der Kondensatleitung (9) in den Luftaustrittskasten (5) hineinragt, oder
- **dass** der Ausgang (11) der Kondensatleitung (9) in den Luftaustrittskasten (5) hineinragt und in Strömungsrichtung (4) der Ladeluft umgebogen ist.

6. Ladeluftkühler nach einem der Ansprüche 1 bis 5,
**dadurch gekennzeichnet,**
- **dass** der in den Luftaustrittskasten (5) ragende Ausgang (11) der Kondensatleitung (9) düsenförmig ausgebildet ist, und/oder
- **dass** der in den Luftaustrittskasten (5) ragende Ausgang (11) der Kondensatleitung (9) einen Durchmesser von 0,5 mm < d < 10,0 mm, bevorzugt einen Durchmesser 0,8 mm < d < 5,0mm aufweist.

7. Verbrennungsmotor (2) mit einem Ladeluftkühler (1) nach einem der vorhergehenden Ansprüche.

## Claims

1. Charge air cooler (1) having
- an air outlet tank (5) and also having a condensate collector (6) for collecting condensate (7) separated off more particularly in the charge air cooler (1),
- a condensate line (9) connected to the condensate collector (6) via an entrance (10),
- wherein the condensate line (9) opens out into the air outlet tank (5) of the charge air cooler (1) via an exit (11), wherein there is a pressure difference p₁ < p₂ between the entrance (10) and the exit (11) of the condensate line (9) during operation of the charge air cooler (1), and said pressure difference allows differential-pressure-induced discharge of condensate from the condensate collector (6) via the condensate line (9),
**characterised in that** the condensate line (9) runs in a wall (15) of the air outlet tank (5).

2. Charge air cooler according to claim 1, **characterised in that** the condensate collector (6) is attached to the air outlet tank (5).

3. Charge air cooler according to any one of the preceding claims, **characterised in that** the condensate collector (6) is attached to the air outlet tank (5) by welding, brazing, adhesive bonding, screw-connection or clipping.

4. Charge air cooler according to claim 1, **characterised in that** the condensate collector (6) forms an integral constituent part of the air outlet tank (5).

5. Charge air cooler according to any one of the preceding claims, **characterised in that**
- the exit (11) of the condensate line (9) projects into the air outlet tank (5) or
- the exit (11) of the condensate line (9) projects into the air outlet tank (5) and is bent round in flow direction (4) of the charge air.

6. Charge air cooler according to any one of claims 1 to 5, **characterised in that**
- the exit (11) of the condensate line (9) projecting into the air outlet tank (5) is designed in the form of a nozzle, and/or
- the exit (11) of the condensate line (9) projecting into the air outlet tank (5) has a diameter of 0.5mm < d < 10.0mm, preferably a diameter 0.8mm < d < 5.0mm.

7. Internal combustion engine (2) having a charge air cooler (1) according to any one of the preceding claims.

## Revendications

1. Refroidisseur d'air de suralimentation (1) avec
- un caisson de sortie d'air (5) ainsi qu'avec un collecteur de condensat (6) pour la collecte de condensat (7) séparé en particulier dans le refroidisseur d'air de suralimentation (1),
- une conduite de condensat (9) qui est raccordée par le biais d'une entrée (10) au collecteur de condensat (6),
- dans lequel la conduite de condensat (9) débouche par le biais d'une sortie (11) dans le caisson de sortie d'air (5) du refroidisseur d'air de suralimentation (1), dans lequel une chute de pression p₁ < p₂ règne en fonctionnement du refroidisseur d'air de suralimentation (1) entre l'entrée (10) et la sortie (11) de la conduite de condensat (9), laquelle permet une évacuation de condensat soumise à pression différentielle du collecteur de condensat (6) par le biais de la conduite de condensat (9),
**caractérisé en ce**
**que** la conduite de condensat (9) s'étend dans une paroi (15) du caisson de sortie d'air (5).

2. Refroidisseur d'air de suralimentation selon la revendication 1,
**caractérisé en ce**
**que** le collecteur de condensat (6) est monté sur le caisson de sortie d'air (5).

3. Refroidisseur d'air de suralimentation selon l'une quelconque des revendications précédentes,
**caractérisé en ce**
**que** le collecteur de condensat (6) est soudé, brasé, collé, vissé ou clipsé sur le caisson de sortie d'air (5).

4. Refroidisseur d'air de suralimentation selon la revendication 1,
**caractérisé en ce**
**que** le collecteur de condensat (6) forme un constituant d'un seul tenant du caisson de sortie d'air (5).

5. Refroidisseur d'air de suralimentation selon l'une quelconque des revendications précédentes,
**caractérisé en ce**
- **que** la sortie (11) de la conduite de condensat (9) pénètre dans le caisson de sortie d'air (5), ou
- **que** la sortie (11) de la conduite de condensat (9) pénètre dans le caisson de sortie d'air (5) et est repliée dans le sens d'écoulement (4) de l'air de suralimentation.

6. Refroidisseur d'air de suralimentation selon l'une quelconque des revendications 1 à 5,
**caractérisé en ce**
- **que** la sortie (11) pénétrant dans le caisson de sortie d'air (5) de la conduite de condensat (9) est réalisée en forme de buse, et/ou
- **que** la sortie (11) pénétrant dans le caisson de sortie d'air (5) de la conduite de condensat (9) présente un diamètre de 0,5 mm < d < 10,0 mm, de préférence un diamètre de 0,8 mm < d < 5,0 mm.

7. Moteur à combustion interne (2) avec un refroidisseur d'air de suralimentation (1) selon l'une quelconque des revendications précédentes.
